# EUROPEAN PATENT APPLICATION

(11) **EP 2 485 124 A1**
(43) Date of publication of application: **08.08.2012**
(21) Application number: 10820213.6
(22) Date of filing: 08.06.2010
(51) Int. Cl.: G06F 3/041

(54) **DISPLAY DEVICE**

(30) Priority: 30.09.2009 JP 2009226566
(71) Applicant: Sharp Kabushiki Kaisha, Osaka-shi, Osaka 545-8522 (JP)
(72) Inventor: YAMAMOTO, Kaoru, Osaka-shi, Osaka 545-8522 (JP); SUGITA, Yasuhiro, Osaka-shi, Osaka 545-8522 (JP)
(74) Representative: Goddar, Heinz J.
(86) International application number: PCT/JP2010/059685
(87) International publication number: WO 2011/040093

(57) **Abstract**

A plurality of sensor pixel circuits 10 each including one photodiode D1, one accumulation node accumulating charge corresponding to an amount of light, a read transistor M1 having a control terminal connected to the accumulation node, and transistors T1 to T4 turning on or off in accordance with a clock signal CLK, and switching a path for a current flowing through the photodiode D1 are arranged in a pixel region 4. In accordance with the clock signal CLK, when a backlight is turned on, a current flows out of the accumulation node, and a potential at the accumulation node drops. When the backlight is turned off, a current flows into the accumulation node, and the potential at the accumulation node rises. The sensor pixel circuit described above is used for detecting a difference between an amount of light to be incident when the backlight is turned on and an amount of light to be incident when the backlight is turned off. Thus, there is provided a display device having an input function which does not depend on light environments.

## Description

### TECHNICAL FIELD

The present invention relates to display devices, and more particularly to a display device in which a plurality of optical sensors are arranged in a pixel region.

### BACKGROUND ART

With regard to display devices, heretofore, there have been known methods of providing input functions such as touch panels, pen input and scanners in such a manner that a plurality of optical sensors are provided on a display panel. In order to adapt such a method to a mobile appliance to be used under various light environments, it is necessary to eliminate an influence of the light environment. Therefore, there has also been known a method of removing a component depending on a light environment from a signal sensed by an optical sensor to obtain a signal to be input intrinsically.

Patent Document 1 describes an input/output device in which light receiving elements are provided corresponding to individual displaying elements. In the input/output device, a backlight is turned on and off once in a one-frame period, and reset for and read from the light receiving elements are performed in a line sequential manner so that an amount of light during a backlight turn-on period and an amount of light during a backlight turn-off period are obtained from all the light receiving elements in the one-frame period.

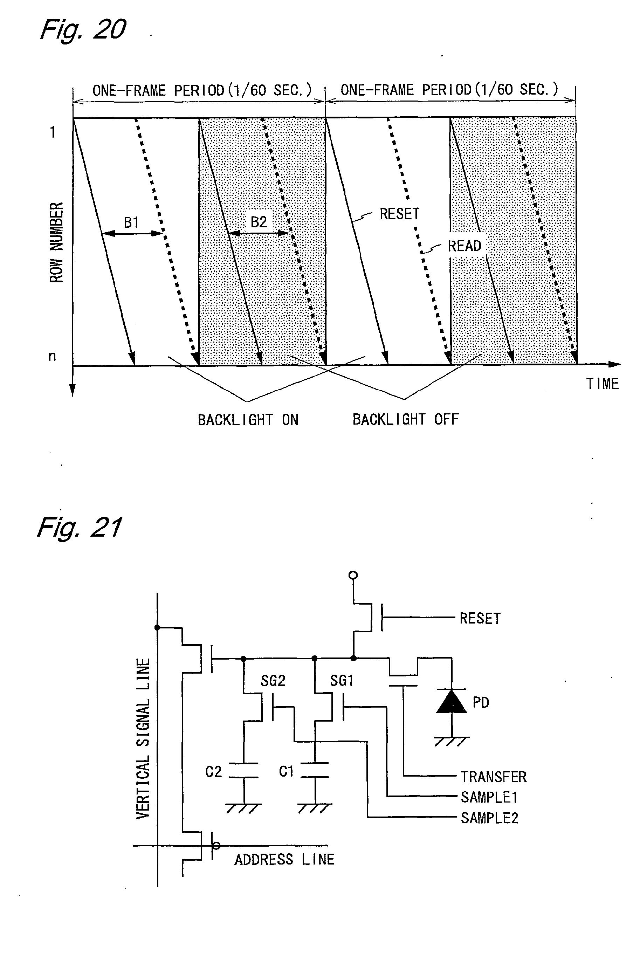

Fig. 20 is a diagram showing turn-on and turn-off timings of the backlight as well as reset and read timings of the light receiving elements, in Patent Document 1. As shown in Fig. 20, in the one-frame period, the backlight is turned on in the former half and is turned off in the latter half. During the backlight turn-on period, the reset for the light receiving elements is performed in a line sequential manner (a solid line arrow), and then the read from the light receiving elements is performed in a line sequential manner (a broken line arrow). Also during the backlight turn-off period, the reset for and read from the light receiving elements are performed in the similar manner.

Patent Document 2 describes a solid-state imaging device including a unit light receiving section shown in Fig. 21. As shown in Fig. 21, the unit light receiving section includes one photoelectric converting part PD, and two charge accumulating parts C1 and C2. In the case of receiving both external light and light which is emitted from light emitting means and then is reflected from a physical object, a first sample gate SG1 turns on, and charge generated by the photoelectric converting part PD is accumulated in the first charge accumulating part C1. In the case of receiving only external light, a second sample gate SG2 turns on, and the charge generated by the photoelectric converting part PD is accumulated in the second charge accumulating part C2. It is possible to obtain a difference between the amounts of charge accumulated in the two charge accumulating parts C1 and C2, thereby obtaining an amount of light which is emitted from the light emitting means and then is reflected from the physical object.

### PRIOR ART DOCUMENTS

### PATENT DOCUMENTS

Patent Document 1: Japanese Patent No. 4072732
Patent Document 2: Japanese Patent No. 3521187

### SUMMARY OF THE INVENTION

### PROBLEMS TO BE SOLVED BY THE INVENTION

In a typical display device in which a plurality of optical sensors are provided on a display panel, read from the optical sensors is performed in a line sequential manner. Moreover, backlights for a mobile appliance are turned on - simultaneously and are turned off simultaneously as an entire screen.

In the input/output device described in Patent Document 1, the backlight is turned on and off once in the one-frame period. During the backlight turn-on period, a period for the reset does not overlap with a period for the read. Also during the backlight turn-off period, a period for the reset does not overlap with a period for the read. Consequently, the read from the light receiving elements needs to be performed within a 1/4-frame period (for example, within 1/240 seconds in the case where a frame rate is 60 frames per second) In an actual fact, however, it is considerably difficult to perform the high-speed read described above.

Moreover, there is a deviation corresponding to a 1/2-frame period between a period (B1 shown in Fig. 20) during which the light receiving element senses light in the backlight turn-on period and a period (B2 shown in Fig. 20) during which the light receiving element senses light in the backlight turn-off period. Consequently, followability to motion input varies in accordance with a direction of the input. Moreover, this input/output device starts to perform the read immediately after completion of the reset, and starts to perform the reset immediately after completion of the read. Consequently, it is impossible to freely set a length and an interval with regard to the backlight turn-on period and the backlight turn-off period.

Moreover, in this input/output device, an amount of light during the backlight turn-on period and an amount of light during the backlight turn-off period are detected by the same light receiving element. Consequently, in the case where a certain light receiving element detects an amount of light during the backlight turn-on period, this light receiving element fails to start to detect an amount of light during the backlight turn-off period until the detected amount of light is read from this light receiving element.

Moreover, this input/output device detects the amount of light during the backlight turn-on period and the amount of light during the backlight turn-off period separately. Consequently, in the case where one of the amounts of light is saturated, it is impossible to correctly obtain a difference between the two amounts of light. As a method for preventing the saturation of the amount of light, there are considered a method of lowering the sensitivity of an optical sensor, and a method of shortening a shutter speed (an accumulation time) . However, when the sensitivity of the optical sensor is lowered, light amount detection accuracy is degraded. Moreover, it is difficult to adjust the shutter speed since a frame rate is determined previously in many cases.

Hence, it is an object of the present invention to provide a display device that solves the problems described above, and has an input function which does not depend on light environments.

### MEANS FOR SOLVING THE PROBLEMS

According to a first aspect of the present invention, there is provided a display device in which a plurality of optical sensors are arranged in a pixel region, the display device including: a display panel that includes a plurality of display pixel circuits and a plurality of sensor pixel circuits; and a drive circuit that outputs, to the sensor pixel circuits, a control signal indicating that a light source is turned on or the light source is turned off, wherein the sensor pixel circuit includes: one optical sensor; one accumulation node accumulating charge corresponding to an amount of sensed light; a read transistor having a control terminal connected to the accumulation node; and a plurality of switching elements that turn on or off in accordance with the control signal and switch a path for a current flowing through the optical sensor, and the sensor pixel circuit is configured so that, in accordance with the control signal, the current flowing through the optical sensor flows in a predetermined direction with respect to the accumulation node when the light source is turned on, and flows in the reverse direction with respect to the accumulation node when the light source is turned off.

According to a second aspect of the present invention, in the first aspect of the present invention, the sensor pixel circuit includes: a first switching element that is provided between a reset line and one of ends of the optical sensor and turns on when the light source is turned on; a second switching element that is provided between a wire applied with a predetermined potential and the other end of the optical sensor and turns on when the light source is turned off; a third switching element that is provided between the accumulation node and the one of ends of the optical sensor and turns on when the light source is turned off; and a fourth switching element that is provided between the accumulation node and the other end of the optical sensor and turns on when the light source is turned on.

According to a third aspect of the present invention, in the second aspect of the present invention, each of the first and third switching elements is configured with a first conductive type transistor, each of the second and fourth switching elements is configured with a second conductive type transistor, the first and second switching elements turn on or off in accordance with a first control signal, the third switching element turns on or off in accordance with a second control signal, the fourth switching element turns on or off in accordance with a third control signal, and each of the second and third control signals is an inverted signal of the first control signal, and changes at a timing which is different from that of the first control signal.

According to a fourth aspect of the present invention, in the second aspect of the present invention, each of the first and fourth switching elements is configured with a first conductive type transistor, each of the second and third switching elements is configured with a second conductive type transistor, the first and fourth switching elements turn on or off in accordance with a first control signal, and the second and third switching elements turn on or off in accordance with a second control signal changing at a different timing in the same direction as the first control signal.

According to a fifth aspect of the present invention, in the second aspect of the present invention, the sensor pixel circuit further includes a capacitor provided between the accumulation node and a read line.

According to a sixth aspect of the present invention, in the second aspect of the present invention, the fourth switching element amplifies a potential at the accumulation node when a potential for read is applied to a control terminal thereof.

According to a seventh aspect of the present invention, in the first aspect of the present invention, the drive circuit outputs, as the control signal, a signal indicating that the light source is turned on and the light source is turned off a plurality of times, respectively, in a one-frame period.

According to an eighth aspect of the present invention, there is provided a sensor pixel circuit to be arranged in a pixel region of a display device, the sensor pixel circuit including: one optical sensor; one accumulation node accumulating charge corresponding to an amount of sensed light; a read transistor having a control terminal connected to the accumulation node; and a plurality of switching elements that turn on or off in accordance with a control signal indicating that a light source is turned on or the light source is turned off, and switch a path for a current flowing through the optical sensor, wherein the sensor pixel circuit is configured so that, in accordance with the control signal, the current flowing through the optical sensor flows in a predetermined direction with respect to the accumulation node when the light source is turned on, and flows in the reverse direction with respect to the accumulation node when the light source is turned off.

### EFFECTS OF THE INVENTION

According to the first aspect of the present invention, the sensor pixel circuit includes the one optical sensor and the one accumulation node. Moreover, the current flows from/into the accumulation node in reverse direction and a potential at the accumulation node changes in reverse direction when the light source is turned on and when the light source is turned off. Accordingly, it is possible to detect a difference between an amount of light when the light source is turned on and an amount of light when the light source is turned off, by use of one sensor pixel circuit, and to provide an input function which does not depend on light environments. Moreover, the difference between the amounts of light is detected by use of one sensor pixel circuit. As compared with the case of detecting two types of amounts of light separately, therefore, it is possible to prevent the amount of light from being saturated and to correctly obtain the difference between the amounts of light. Moreover, as compared with the case of detecting two types of amounts of light sequentially by use of one sensor pixel circuit, it is possible to reduce a frequency of read from the sensor pixel circuits, to retard the read speed, and to reduce power consumption in the device. Moreover, it becomes unnecessary to provide a memory which is required in the case of detecting two types of amounts of light sequentially and is used for storing the amount of light sensed firstly. Moreover, it is possible to increase the degree of freedom for setting turn-on and turn-off timings of the light source as well as reset and read timings of the sensor pixel circuits. Moreover, in case of using a suitable driving method, it is possible to eliminate a deviation between a sensing period when the light source is turned on and a sensing period when the light source is turned off, and to prevent followability to motion input from varying in accordance with a direction of the input. Moreover, by obtaining the difference between the amounts of light by use of one sensor pixel circuit, it is possible to perform temperature compensation at the same time.

According to the second aspect of the present invention, when the light source is turned on, the first and fourth switching elements turn on, and a current path is formed to pass through the optical sensor and the first and fourth switching elements. When the light source is turned off, the second and third switching elements turn on, and a current path is formed to pass through the optical sensor and the second and third switching elements. Accordingly, by setting a potential at the reset line and the predetermined potential appropriately, it is possible to constitute the sensor pixel circuit in which the current flows from/into the accumulation node in reverse direction when the light source is turned on and when the light source is turned off and which is allowed to detect the difference between the amount of light when the light source is turned on and the amount of light when the light source is turned off.

According to the third aspect of the present invention, when the light source is turned on, the first and fourth switching elements turn on, so that a predetermined current path is formed. When the light source is turned off, the second and third switching elements turn on, so that a different current path is formed. Moreover, the second and third control signals change at the timing which is different from that of the first control signal. Therefore, it is possible to accurately control an existence period of the current path and to enhance detection accuracy.

According to the fourth aspect of the present invention, when the light source is turned on, the first and fourth switching elements turn on, so that a predetermined current path is formed. When the light source is turned off, the second and third switching elements turn on, so that a different current path is formed. Moreover, by using the two control signals, it is possible to reduce the number of control signals, to increase an aperture ratio, and to enhance the sensitivity of the sensor pixel circuit.

According to the fifth aspect of the present invention, by applying a potential for read to the read line, it is possible to change a potential at the accumulation node, and to read a signal corresponding to the amount of sensed light from the sensor pixel circuit.

According to the sixth aspect of the present invention, when the potential for read is applied to the control terminal of the fourth switching element, the potential at the accumulation node is amplified. Thus, it is possible to enhance the sensitivity of the sensor pixel circuit.

According to the seventh aspect of the present invention, by performing the operation of sensing light when the light source is turned on and the operation of sensing light when the light source is turned off a plurality of times, respectively, in the one-frame period, it is possible to prevent the amount of light from being saturated, and to correctly obtain the difference between the amounts of light. Moreover, it is possible to eliminate the deviation between the sensing period when the light source is turned on and the sensing period when the light source is turned off, and to prevent followability to motion input from varying in accordance with a direction of the input.

According to the eighth aspect of the present invention, it is possible to constitute the sensor pixel circuit to be included in the display device according to the first aspect, and to provide the display device having an input function which does not depend on light environments.

### BRIEF DESCRIPTION OF THE DRAWINGS

Fig. 1 is a block diagram showing a configuration of a display device according to one embodiment of the present invention.
Fig. 2 is a diagram showing an arrangement of sensor pixel circuits on a display panel included in the display device shown in Fig. 1.
Fig. 3 is a diagram showing turn-on and turn-off timings of a backlight as well as reset and read timings of the sensor pixel circuits, in the display device shown in Fig. 1.
Fig. 4 is a signal waveform diagram of the display panel included in the display device shown in Fig. 1.
Fig. 5 is a diagram showing a schematic configuration of the sensor pixel circuit included in the display device shown in Fig. 1.
Fig. 6 is a circuit diagram of a sensor pixel circuit according to a first embodiment of the present invention.
Fig. 7A is a layout diagram of the sensor pixel circuit shown in Fig. 6.
Fig. 7B is another layout diagram of the sensor pixel circuit shown in Fig. 6.
Fig. 8 is a diagram showing operations of the sensor pixel circuit shown in Fig. 6.
Fig. 9 is a signal waveform diagram of the sensor pixel circuit shown in Fig. 6.
Fig. 10 is a circuit diagram of a sensor pixel circuit according to a second embodiment of the present invention.
Fig. 11 is a diagram showing operations of the sensor pixel circuit shown in Fig. 10.
Fig. 12 is a signal waveform diagram of the sensor pixel circuit shown in Fig. 10.
Fig. 13 is a circuit diagram of a sensor pixel circuit according to a third embodiment of the present invention.
Fig. 14A is a layout diagram of the sensor pixel circuit shown in Fig. 13.
Fig. 14B is another layout diagram of the sensor pixel circuit shown in Fig. 13.
Fig. 15 is a diagram showing operations of the sensor pixel circuit shown in Fig. 13.
Fig. 16 is a signal waveform diagram of the sensor pixel circuit shown in Fig. 13.
Fig. 17A is a circuit diagram of a sensor pixel circuit according to a first modification example of the first embodiment.
Fig. 17B is a circuit diagram of a sensor pixel circuit according to a second modification example of the first embodiment.
Fig. 17C is a circuit diagram of a sensor pixel circuit according to a third modification example of the first embodiment.
Fig. 17D is a circuit diagram of a sensor pixel circuit according to a fourth modification example of the first embodiment.
Fig. 17E is a circuit diagram of a sensor pixel circuit according to a fifth modification example of the first embodiment.
Fig. 17F is a circuit diagram of a sensor pixel circuit according to a sixth modification example of the first embodiment.
Fig. 17G is a circuit diagram of a sensor pixel circuit according to a seventh modification example of the first embodiment.
Fig. 18A is a circuit diagram of a sensor pixel circuit according to a first modification example of the second embodiment.
Fig. 18B is a circuit diagram of a sensor pixel circuit according to a second modification example of the second embodiment.
Fig. 18C is a circuit diagram of a sensor pixel circuit according to a third modification example of the second embodiment.
Fig. 18D is a circuit diagram of a sensor pixel circuit according to a fourth modification example of the second embodiment.
Fig. 18E is a circuit diagram of a sensor pixel circuit according to a fifth modification example of the second embodiment.
Fig. 18F is a circuit diagram of a sensor pixel circuit according to a sixth modification example of the second embodiment.
Fig. 18G is a circuit diagram of a sensor pixel circuit according to a seventh modification example of the second embodiment.
Fig. 19A is a circuit diagram of a sensor pixel circuit according to a first modification example of the third embodiment.
Fig. 19B is a circuit diagram of a sensor pixel circuit according to a second modification example of the third embodiment.
Fig. 19C is a circuit diagram of a sensor pixel circuit according to a third modification example of the third embodiment.
Fig. 19D is a circuit diagram of a sensor pixel circuit according to a fourth modification example of the third embodiment.
Fig. 19E is a circuit diagram of a sensor pixel circuit according to a fifth modification example of the third embodiment.
Fig. 20 is a diagram showing turn-on and turn-off timings of a backlight as well as reset and read timings of light receiving elements, in a conventional input/output device.
Fig. 21 is a circuit diagram of a unit light receiving section included in a conventional solid-state imaging device.

### MODES FOR CARRYING OUT THE INVENTION

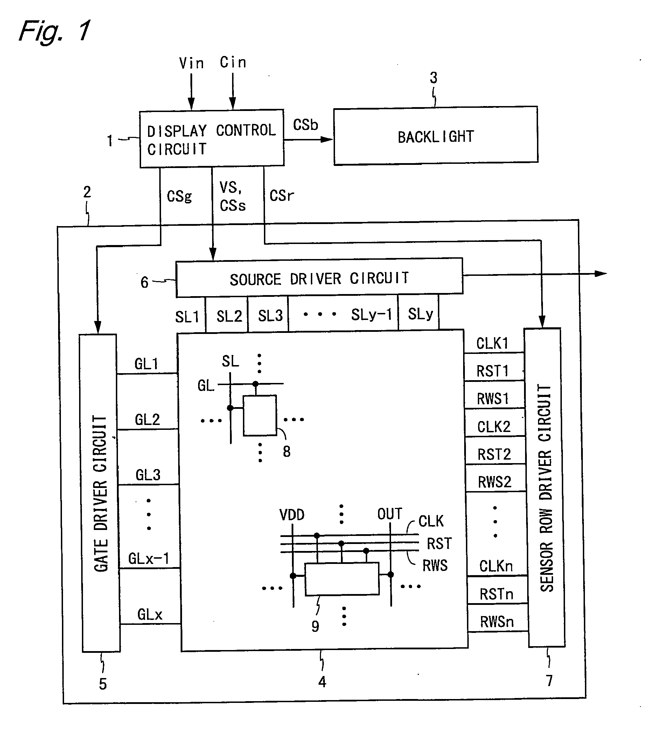

Fig. 1 is a block diagram showing a configuration of a display device according to one embodiment of the present invention. As shown in Fig. 1, the display device includes a display control circuit 1, a display panel 2 and a backlight 3. The display panel 2 includes a pixel region 4, a gate driver circuit 5, a source driver circuit 6 and a sensor row driver circuit 7. The pixel region 4 includes a plurality of display pixel circuits 8 and a plurality of sensor pixel circuits 9. This display device has a function of displaying an image on the display panel 2, and a function of sensing light incident on the display panel 2. In the following definition, "x" represents an integer of not less than 2, "y" represents a multiple of 3, "m" and "n" each represent an even number, and a frame rate of the display device is 60 frames per second.

-To the display device shown in Fig. 1, a video signal Vin and a timing control signal Cin are supplied from the outside. Based on these signals, the display control circuit 1 outputs a video signal VS and control signals CSg, CSs and CSr to the display panel 2, and outputs a control signal CSb to the backlight 3. The video signal VS may be equal to the video signal Vin, or may be a signal corresponding to the video signal Vin subjected to signal processing.

The backlight 3 is a light source for irradiating light to the display panel 2. More specifically, the backlight 3 is provided on a back side of the display panel 2, and irradiates light to the back of the display panel 2. The backlight 3 is turned on when the control signal CSb is in a HIGH level, and is turned off when the control signal CSb is in a LOW level.

In the pixel region 4 of the display panel 2, the (x × y) display pixel circuits 8 and the (n × m/2) sensor pixel circuits 9 are arranged in a two-dimensional array, respectively. More specifically, "x" gate lines GL1 to GLx and "y" source lines SL1 to SLy are formed in the pixel region 4. The gate lines GL1 to GLx are arranged in parallel to one another, and the source lines SL1 to SLy are arranged in parallel to one another so as to be orthogonal to the gate lines GL1 to GLx. The (x × y) display pixel circuits 8 are arranged in the vicinity of intersections between the gate lines GL1 to GLx and the source lines SL1 to SLy. Each display pixel circuit 8 is connected to one gate line GL and one source line SL. The display pixel circuits 8 are classified into those for red display, those for green display and those for blue display. These three types of display pixel circuits 8 are arranged and aligned in an extending direction of the gate lines GL1 to GLx to form one color pixel.

In the pixel region 4, "n" clock lines CLK1 to CLKn, "n" reset lines RST1 to RSTn and "n" read lines RWS1 to RWSn are formed in parallel to the gate lines GL1 to GLx. Moreover, in the pixel region 4, other signal lines and power supply lines (not shown) are formed in parallel to the gate lines GL1 to GLx. In the case where read from the sensor pixel circuits 9 is performed, "m" source lines selected from among the source lines SL1 to SLy are used as power supply lines VDD1 to VDDm, and different "m" source lines are used as output lines OUT1 to OUTm.

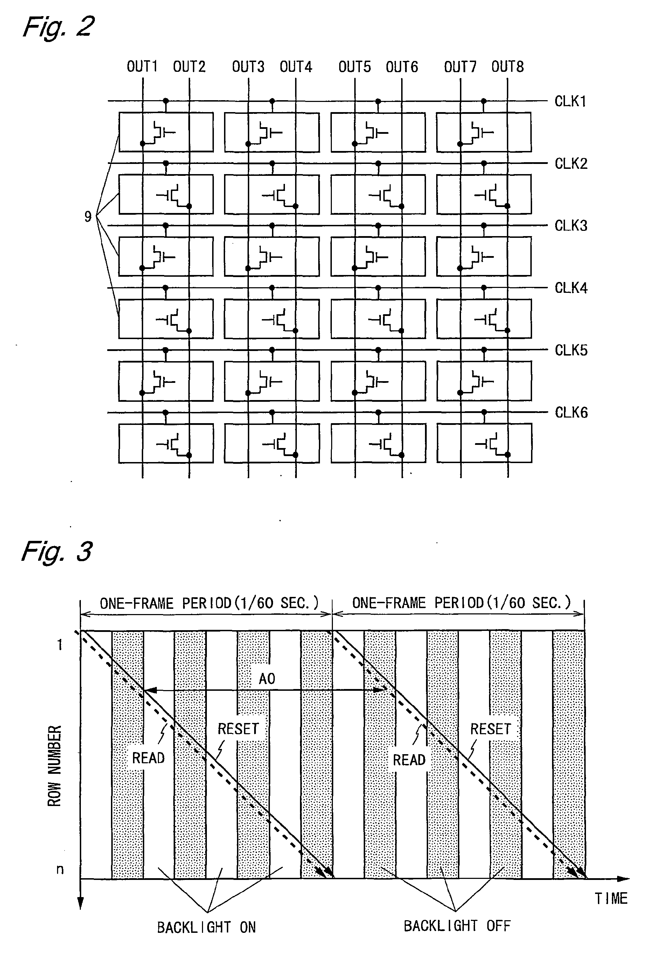

Fig. 2 is a diagram showing an arrangement of the sensor pixel circuits 9 in the pixel region 4. As shown in Fig. 2, the (n × m/2) sensor pixel circuits 9 are arranged in the vicinity of intersections between the odd-numbered clock lines CLK1 to CLKn-1 and the odd-numbered output lines OUT1 to OUTm-1 and in the vicinity of intersections between the even-numbered clock lines CLK2 to CLKn and the even-numbered output lines OUT2 to OUTm.

The gate driver circuit 5 drives the gate lines GL1 to GLx. More specifically, based on the control signal CSg, the gate driver circuit 5 selects one gate line sequentially from among the gate lines GL1 to GLx, applies a HIGH-level potential to the selected gate line, and applies a LOW-level potential to the remaining gate lines. Thus, the "y" display pixel circuits 8 connected to the selected gate line are selected collectively.

The source driver circuit 6 drives the source lines SL1 to SLy. More specifically, based on the control signal CSs, the source driver circuit 6 applies potentials corresponding to the video signal VS to the source lines SL1 to SLy. Herein, the source driver circuit 6 may perform line sequential drive, or may perform dot sequential drive. The potentials applied to the source lines SL1 to SLy are written to the "y" display pixel circuits 8 selected by the gate driver circuit 5. As described above, it is possible to write the potentials corresponding to the video signal VS to all the display pixel circuits 8 by use of the gate driver circuit 5 and the source driver circuit 6, thereby displaying a desired image on the display panel 2.

The sensor row driver circuit 7 drives the clock lines CLK1 to CLKn, the reset lines RST1 to RSTn, the read lines RWS1 to RWSn, and the like. More specifically, based on the control signal CSr, the sensor row driver circuit 7 applies a HIGH-level potential to the clock lines CLK1 to CLKn when the backlight 3 is turned on, and applies a LOW-level potential to the clock lines CLK1 to CLKn when the backlight 3 is turned off. Moreover, based on the control signal CSr, the sensor row driver circuit 7 selects one reset line sequentially from among the reset lines RST1 to RSTn, applies a HIGH-level potential for reset to the selected reset line, and applies a LOW-level potential to the remaining reset lines. Thus, the (m/2) sensor pixel circuits 9 connected to the selected reset line are reset collectively.

Moreover, based on the control signal CSr, the sensor row driver circuit 7 selects one read line sequentially from among the read lines RWS1 to RWSn, applies a HIGH-level potential for read to the selected read line, and applies a LOW-level potential to the remaining read lines. Thus, the (m/2) sensor pixel circuits 9 connected to the selected read line turn to a readable state collectively. Herein, the source driver circuit 6 applies a HIGH-level potential to the power supply lines VDD1 to VDDm. Thus, the (m/2) sensor pixel circuits 9 in the readable state output signals corresponding to amounts of light sensed by the respective sensor pixel circuits 9 (hereinafter, referred to as sensor signals) to the output lines OUT1 to OUTm.

The source driver circuit 6 amplifies the sensor signals output to the output lines OUT1 to OUTm, and outputs the amplified signals sequentially as a sensor output Sout to the outside of the display panel 2. As described above, by reading the sensor signals from all the sensor pixel circuits 9 by use of the source driver circuit 6 and the sensor row driver circuit 7, it is possible to sense light incident on the display panel 2. The display device shown in Fig. 1 performs the following consecutive drive in order to sense light incident on the display panel 2.

Fig. 3 is a diagram showing turn-on and turn-off timings of the backlight 3 as well as reset and read timings of the sensor pixel circuits 9. As shown in Fig. 3, the backlight 3 is turned on a plurality of times and is turned off a plurality of times in a one-frame period. It is assumed in the following description that the backlight 3 is turned on four times and is turned off four times in a one-frame period. A turn-on period is equal in length to a turn-off period. The reset for the sensor pixel circuits 9 is performed in a line sequential manner over a one-frame period (a solid line arrow). The read from the sensor pixel circuits 9 is performed after a lapse of almost the one-frame period from the reset (more specifically, after a lapse of a time which is slightly shorter than the one-frame period) (a broken line arrow).

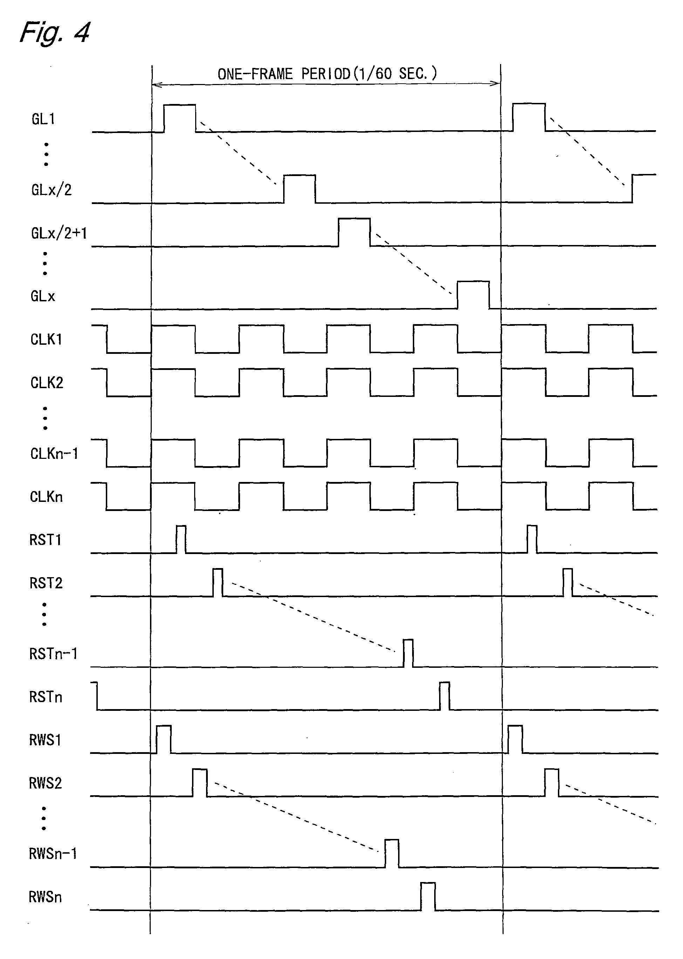

Fig. 4 is a signal waveform diagram of the display panel 2. As shown in Fig. 4, potentials at the gate lines GL1 to GLx sequentially turn to the HIGH level once for a predetermined time in a one-frame period. Potentials at the clock lines CLK1 to CLKn change at the same timing, and turn to the HIGH level and the LOW level four times, respectively, in the one-frame period. With regard to the potentials at the clock lines CLK1 to CLKn, the HIGH-level period is equal in length to the LOW-level period. Potentials at the reset lines RST1 to RSTn sequentially turn to the HIGH level once for a predetermined time in the one-frame period. Potentials at the read lines RWS1 to RWSn also sequentially turn to the HIGH level once for a predetermined time in the one-frame period. Immediately after the potential at the read line RWS1 changes from the HIGH level to the LOW level, the potential at the reset line RST1 changes from the LOW level to the HIGH level. Similar things hold true for the potentials at the reset lines RST2 to RSTn. Therefore, a period during which the sensor pixel circuit 9 senses light (a period from the reset to the read: A0 shown in Fig. 3) becomes almost equal in length to the one-frame period.

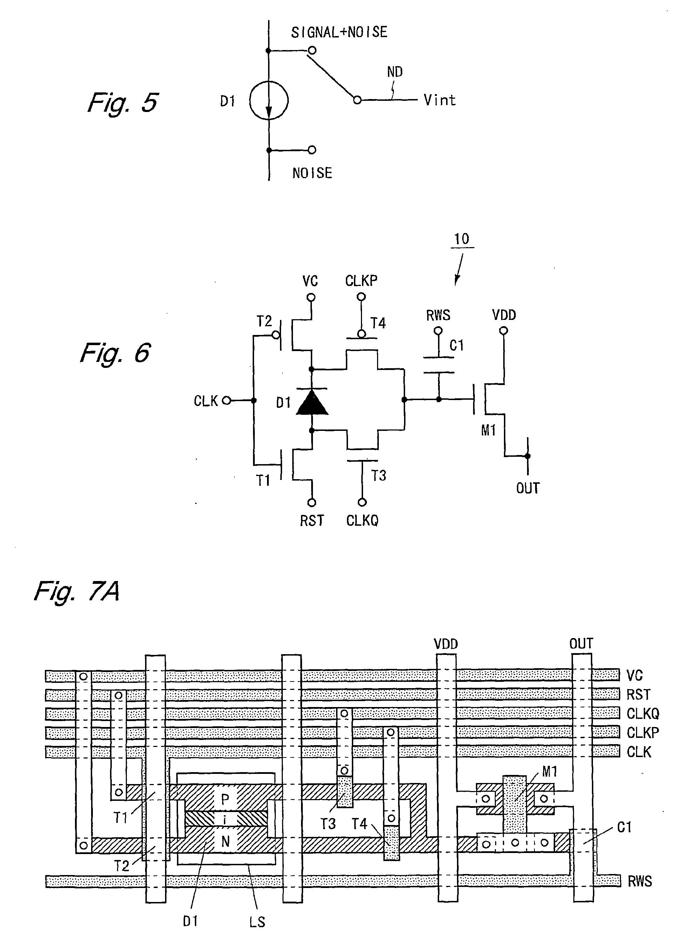

Fig. 5 is a diagram showing a schematic configuration of the sensor pixel circuit 9. As shown in Fig. 5, the sensor pixel circuit 9 includes one photodiode D1 and one accumulation node ND. The photodiode D1 pulls out, of the accumulation node ND, charge corresponding to an amount of light to be incident while the backlight 3 is turned on, and adds, to the accumulation node ND, charge corresponding to an amount of light to be incident while the backlight 3 is turned off. Therefore, a potential Vint at the accumulation node ND drops in accordance with the amount of light to be incident during a turn-on period of the backlight 3 (which corresponds to (signal + noise)), and rises in accordance with the amount of light to be incident during a turn-off period of the backlight 3 (which corresponds to noise). A sensor signal corresponding to a difference between the two types of amounts of light is read from the sensor pixel circuit 9.

It is to be noted that the number of sensor pixel circuits 9 to be provided in the pixel region 4 may be arbitrary. For example, the (n × m) sensor pixel circuits 9 may be provided in the pixel region 4. Alternatively, the sensor pixel circuits 9 the number of which is equal to that of color pixels (that is, (x × y/3)) may be provided in the pixel region 4. Alternatively, the sensor pixel circuits 9 the number of which is smaller than that of color pixels (for example, one severalth to one several tenth of color pixels) may be provided in the pixel region 4.

As described above, the display device according to the embodiment of the present invention is the display device in which the plurality of photodiodes (optical sensors) are arranged in the pixel region 4. The display device includes the display panel 2 that includes the plurality of display pixel circuits 8 and the plurality of sensor pixel circuits 9, and the sensor row driver circuit 7 (drive circuit) that outputs, to the sensor pixel circuit 9, the clock signals CLK1 to CLKn (control signals) each indicating that the backlight is turned on or the backlight is turned off. Hereinafter, description will be given of the details of the sensor pixel circuit 9 included in this display device. In the following description, a sensor pixel circuit is simply referred to as a pixel circuit, and a signal on a signal line is designated using the designation of the signal line for the sake of identification (for example, a signal on a clock line CLK is referred to as a clock signal CLK). The pixel circuit is connected to the clock line CLK, the reset line RST, the read line RWS, the power supply line VDD and the output line OUT, and is supplied with a potential VC and an inverted signal of a clock signal CLK. The potential VC is a potential which is higher than a HIGH-level potential for reset.

### (First Embodiment)

Fig. 6 is a circuit diagram of a pixel circuit according to a first embodiment of the present invention. A pixel circuit 10 shown in Fig. 6 includes transistors T1 to T4 and M1, a photodiode D1, and a capacitor C1. Each of the transistors T1, T3 and M1 is an N-type TFT (Thin Film Transistor), and each of the transistors T2 and T4 is a P-type TFT. The pixel circuit 10 is connected to three clock lines CLK, CLKP and CLKQ.

As shown in Fig. 6, gates of the transistors T1 and T2 are connected to the clock line CLK, a gate of the transistor T3 is connected to the clock line CLKQ, and a gate of the transistor T4 is connected to the clock line CLKP. In the transistor T1, a source is connected to a reset line RST, and a drain is connected to an anode of the photodiode D1 and a drain of the transistor T3. In the transistor T2, a source is applied with a potential VC, and a drain is connected to a cathode of the photodiode D1 and a drain of the transistor T4. Sources of the transistors T3 and T4 are connected to a gate of the transistor M1. In the transistor M1, a drain is connected to a power supply line VDD, and a source is connected to an output line OUT. The capacitor C1 is provided between the gate of the transistor M1 and a read line RWS. In the pixel circuit 10, a node connected to the gate of the transistor M1 serves as an accumulation node that accumulates charge corresponding to an amount of sensed light, and the transistor M1 functions as a read transistor.

Fig. 7A is a layout diagram of the pixel circuit 10. As shown in Fig. 7A, the pixel circuit 10 has a configuration that a light shielding film LS, a semiconductor layer (hatch pattern portion), a gate wiring layer (dot pattern portion) and a source wiring layer (white portions) are formed sequentially on a glass substrate. A contact (shown with a white circle) is provided at a place where the semiconductor layer and the source wiring layer are connected, and a place where the gate wiring layer and the source wiring layer are connected. The transistors T1 to T4 and M1 are formed by arranging the semiconductor layer and the gate wiring layer so that these two layers cross one another. The photodiode D1 is formed by arranging a P layer, an I layer and an N layer included in the semiconductor layer so that these three layers are aligned. The capacitor C1 is formed by arranging the semiconductor layer and the gate wiring layer so that these two layers overlap. The light shielding film LS is made of metal, and prevents light entering through the back of the glass substrate from being incident on the photodiode D1.

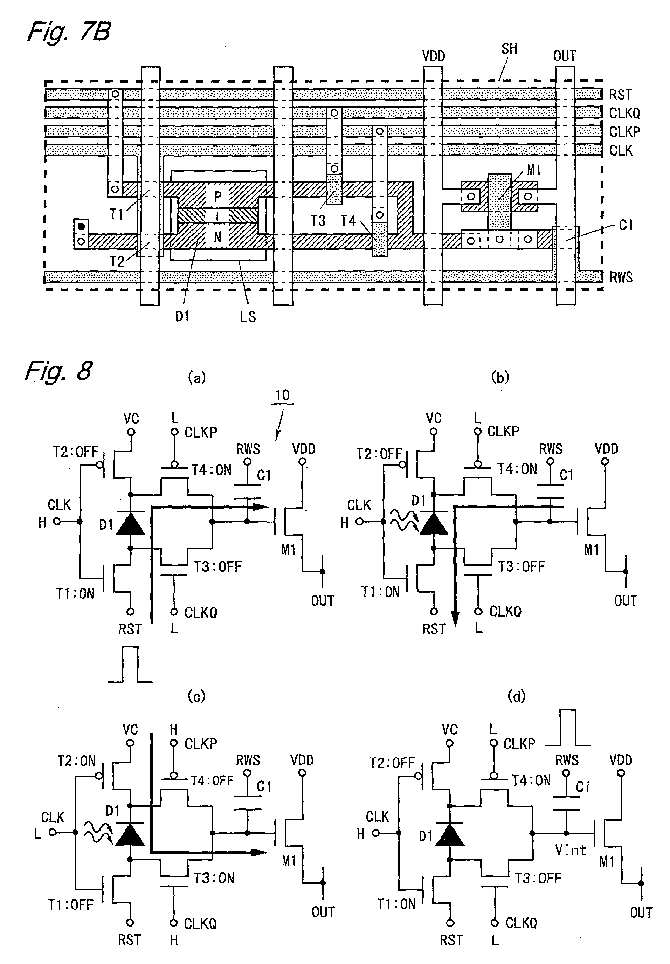

Fig. 7B is another layout diagram of the pixel circuit 10. According to the layout shown in Fig. 7B, the potential VC is applied to a shield SH (a transparent electrode: shown with a bold broken line) for covering a layout surface, and a contact (shown with a black circle) is provided at a place where the shield SH and the source wiring layer are connected. It is to be noted that the layout of the pixel circuits 10 may be changed in a form other than those described above.

Fig. 8 is a diagram showing operations of the pixel circuit 10. As shown in Fig. 8, the pixel circuit 10 performs (a) reset, (b) accumulation when a backlight is turned on, (c) accumulation when the backlight is turned off, and (d) read, in a one-frame period. The accumulation when the backlight is turned on and the accumulation when the backlight is turned off are performed four times, respectively, in the one-frame period.

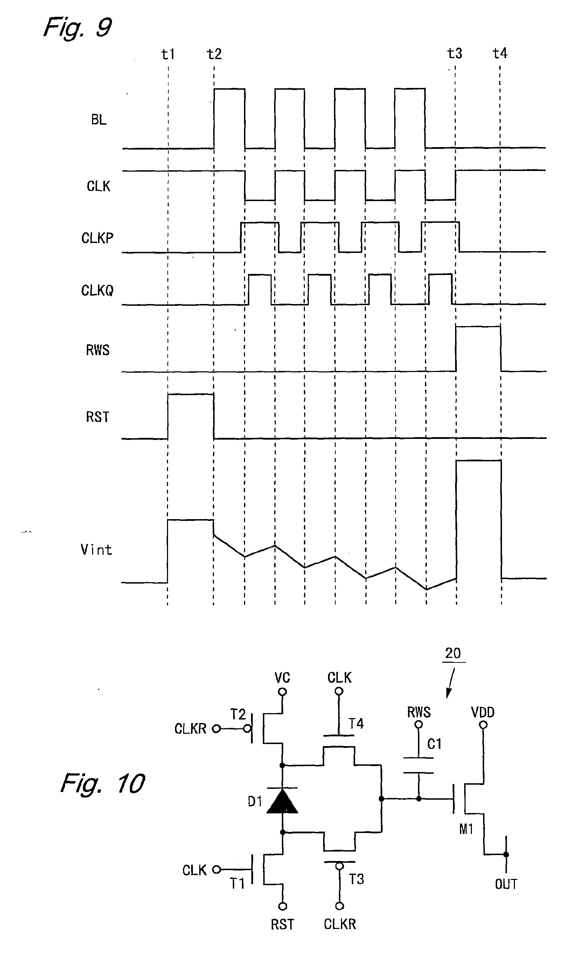

Fig. 9 is a signal waveform diagram of the pixel circuit 10. In Fig. 9, BL represents a brightness of the backlight 3, and Vint represents a potential at the accumulation node (a gate potential at the transistor M1). Each of the clock signals CLKP and CLKQ is an inverted signal of the clock signal CLK. However, a LOW-level period of the clock signal CLKP and a HIGH-level period of the clock signal CLKQ are equal in length to each other, and are shorter than a half cycle of the clock signal CLK. In Fig. 9, a reset period corresponds to a range from a time t1 to a time t2, an accumulation period corresponds to a range from the time t2 to a time t3, and a read period corresponds to a range from the time t3 to a time t4.

In the reset period, the clock signal CLK turns to a HIGH level, the clock signals CLKP and CLKQ and the read signal RWS turn to a LOW level, and the reset signal RST turns to a HIGH level for reset. Herein, the transistors T1 and T4 turn on, and the transistors T2 and T3 turn off. Accordingly, a current (a forward current in the photodiode D1) flows from the reset line RST into the accumulation node via the transistor T1, the photodiode D1 and the transistor T4 (Fig. 8 (a)), and the potential Vint is reset to a predetermined level.

In the accumulation period, the reset signal RST and the read signal RWS turn to the LOW level, and the clock signals CLK, CLKP and CLKQ turn to the HIGH level and the LOW level four times, respectively. While the clock signal CLK is in the HIGH level and the clock signals CLKP and CLKQ are in the LOW level, the transistors T1 and T4 turn on and the transistors T2 and T3 turn off. Herein, when light is incident on the photodiode D1, a current (a photocurrent in the photodiode D1) flows from the accumulation node into the reset line RST via the transistor T4, the photodiode D1 and the transistor T1, and charge is pulled out of the accumulation node (Fig. 8 (b)). Accordingly, the potential Vint drops in accordance with an amount of light to be incident while the clock signal CLK is in the HIGH level (a turn-on period of the backlight 3).

On the other hand, while the clock signal CLK is in the LOW level and the clock signals CLKP and CLKQ are in the HIGH level, the transistors T1 and T4 turn off and the transistors T2 and T3 turn on. Herein, when light is incident on the photodiode D1, a current (a photocurrent in the photodiode D1) flows from a wire having the potential VC into the accumulation node via the transistor T2, the photodiode D1 and the transistor T3, and charge is added to the accumulation node (Fig. 8 (c)). Accordingly, the potential Vint rises in accordance with an amount of light to be incident while the clock signal CLK is in the LOW level (a turn-off period of the backlight 3).

In the read period, the clock signal CLK turns to the HIGH level, the clock signals CLKP and CLKQ and the reset signal RST turn to the LOW level, and the read signal RWS turns to a HIGH level for read. Herein, the transistors T1 and T4 turn on, and the transistors T2 and T3 turn off. Herein, the potential Vint rises by an amount which is (Cq/Cp) times (Cp: a capacitance value of the entire pixel circuit 10, Cq: a capacitance value of the capacitor C1) as large as a rise amount of a potential at the read signal RWS. The transistor M1 constitutes a source follower amplification circuit having, as a load circuit, a transistor (not shown) included in the source driver circuit 6, and drives the output line OUT in accordance with the potential Vint (Fig. 8 (d)).

As described above, the pixel circuit 10 according to this embodiment includes the one photodiode D1 (optical sensor), the one accumulation node which accumulates the charge corresponding to the amount of sensed light, the transistor M1 (read transistor) which has the control terminal connected to the accumulation node, and the transistors T1 to T4 (plurality of switching elements) which turn on or off in accordance with the clock signal CLK and switch the path for the current flowing through the photodiode D1.

The transistor T1 is provided between the reset line RST and one of the ends of the photodiode D1, and turns on when the backlight is turned on. The transistor T2 is provided between the wire applied with the predetermined potential VC and the other end of the photodiode D1, and turns on when the backlight is turned off. The transistor T3 is provided between the accumulation node and one of the ends of the photodiode D1, and turns on when the backlight is turned off. The transistor T4 is provided between the accumulation node and the other end of the photodiode D1, and turns on when the backlight is turned on. Each of the transistors T1 and T3 is the N-type (first conductive type) transistor, and each of the transistors T2 and T4 is the P-type (second conductive type) transistor. The transistors T1 and T2 turn on or off in accordance with the clock signal CLK (first control signal), the transistor T3 turns on or off in accordance with the clock signal CLKQ (second control signal), and the transistor T4 turns on or off in accordance with the clock signal CLKP (third control signal). Each of the clock signals CLKP and CLKQ is the inverted signal of the clock signal CLK, and changes at the timing which is different from that of the clock signal CLK.

When the backlight is turned on, the transistors T1 and T4 turn on, the current path is formed to pass through the optical sensor and the transistors T1 and T4, and the current flows out of the accumulation node. When the backlight is turned off, the transistors T2 and T3 turn on, the current path is formed to pass through the optical sensor and the transistors T2 and T3, and the current flows into the accumulation node. As described above, since the current flows through the accumulation node in reverse direction when the backlight is turned on and when the backlight is turned off, the potential at the accumulation node changes in reverse direction when the backlight is turned on and when the backlight is turned off. According to the pixel circuit 10, hence, it is possible to detect the difference between the amount of light when the backlight is turned on and then amount of light when the backlight is turned off, by use of one sensor pixel circuit, and to give an input function which does not depend on light environments.

Moreover, the difference between the amounts of light is detected by use of one sensor pixel circuit. Therefore, as compared with the case of detecting two types of amounts of light separately, it is possible to prevent the amount of light from being saturated and to correctly obtain the difference between the amounts of light. Moreover, as compared with the case of detecting two types of amounts of light sequentially by use of one sensor pixel circuit, it is possible to reduce a frequency of the read from the sensor pixel circuits, to retard the read speed, and to reduce power consumption in the device. Moreover, it becomes unnecessary to provide a memory which is required in the case of detecting two types of amounts of light sequentially and is used for storing the amount of light sensed firstly. Moreover, it is possible to increase the degree of freedom for setting the turn-on and turn-off timings of the backlight as well as the reset and read timings of the sensor pixel circuits. Moreover, the operation of sensing light when the backlight is turned on and the operation of sensing light when the backlight is turned off are performed a plurality of times, respectively, in the one-frame period. Therefore, it is possible to eliminate a deviation between the sensing period when the backlight is turned on and the sensing period when the backlight is turned off, and to prevent followability to motion input from varying in accordance with a direction of the input. Moreover, by obtaining the difference between the amounts of light by use of one sensor pixel circuit, it is possible to perform temperature compensation at the same time.

Moreover, it is possible to correctly control an existence period of a current path and to enhance detection accuracy since each of the clock signals CLKP and CLKQ changes at the timing which is different from that of the clock signal CLK. Moreover, the pixel circuit 10 further includes the capacitor C1 provided between the accumulation node and the read line RWS. Accordingly, by applying a HIGH-level potential for read to the read line RWS, it is possible to change the potential at the accumulation node, and to read the signal corresponding to the amount of sensed light from the pixel circuit 10.

### (Second Embodiment)

Fig. 10 is a circuit diagram of a pixel circuit according to a second embodiment of the present invention. A pixel circuit 20 shown in Fig. 10 includes transistors T1 to T4 and M1, a photodiode D1, and a capacitor C1. Each of the transistors T1, T4 and M1 is an N-type TFT, and each of the transistors T2 and T3 is a P-type TFT. The pixel circuit 20 is connected to two clock lines CLK and CLKR.

As shown in Fig. 10, gates of the transistors T1 and T4 are connected to the clock line CLK, and gates of the transistors T2 and T3 are connected to the clock line CLKR. In the transistor T1, a source is connected to a reset line RST, and a drain is connected to an anode of the photodiode D1 and a source of the transistor T3. In the transistor T2, a source is applied with a potential VC, and a drain is connected to a cathode of the photodiode D1 and a source of the transistor T4. Drains of the transistors T3 and T4 are connected to a gate of the transistor M1. In the transistor M1, a drain is connected to a power supply line VDD, and a source is connected to an output line OUT. The capacitor C1 is provided between the gate of the transistor M1 and a read line RWS. In the pixel circuit 20, a node connected to the gate of the transistor M1 serves as an accumulation node, and the transistor M1 functions as a read transistor.

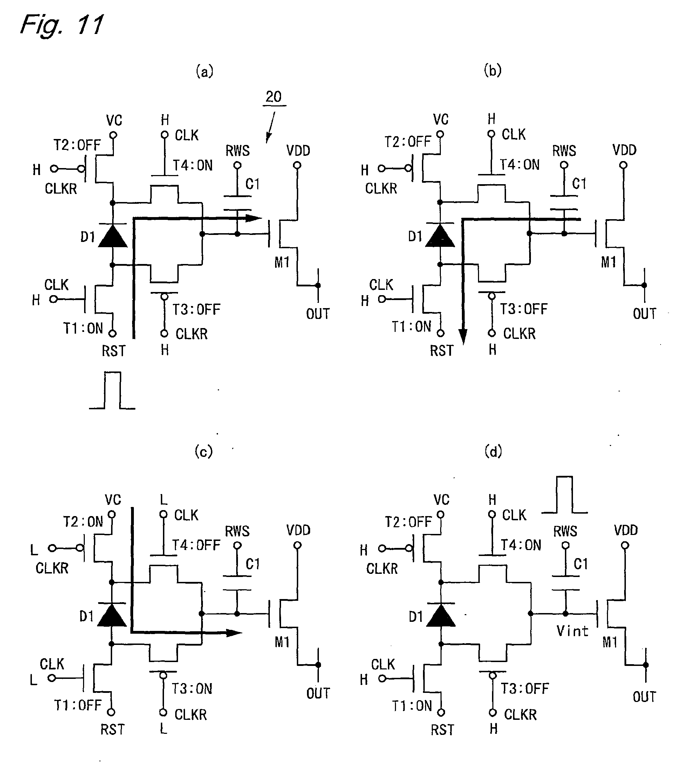

Fig. 11 is a diagram showing operations of the pixel circuit 20. As shown in Fig. 11, the pixel circuit 20 performs (a) reset, (b) accumulation when a backlight is turned on, (c) accumulation when the backlight is turned off, and (d) read, in a one-frame period. The accumulation when the backlight is turned on and the accumulation when the backlight is turned off are performed four times, respectively, in the one-frame period.

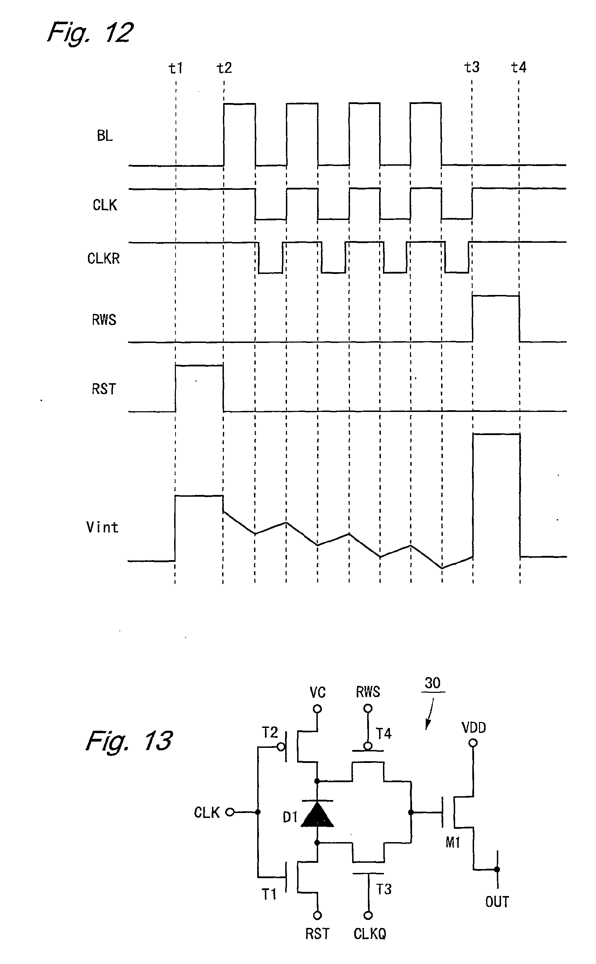

Fig. 12 is a signal waveform diagram of the pixel circuit 20. As shown in Fig. 12, the clock signal CLKR turns on or off as in the clock signal CLK. However, a LOW-level period of the clock signal CLKR is shorter than a half cycle of the clock signal CLK. In Fig. 12, a reset period corresponds to a range from a time t1 to a time t2, an accumulation period corresponds to a range from the time t2 to a time t3, and a read period corresponds to a range from the time t3 to a time t4.

In the reset period, the clock signals CLK and CLKR turn to a HIGH level, the read signal RWS turns to a LOW level, and the reset signal RST turns to a HIGH level for reset. Herein, the transistors T1 and T4 turn on, and the transistors T2 and T3 turn off. Accordingly, a current (a forward current in the photodiode D1) flows from the reset line RST into the accumulation node via the transistor T1, the photodiode D1 and the transistor T4 (Fig. 11 (a)), and the potential Vint is reset to a predetermined level.

In the accumulation period, the reset signal RST and the read signal RWS turn to the LOW level, and the clock signals CLK and CLKR turn to the HIGH level and the LOW level four times, respectively. While the clock signals CLK and CLKR are in the HIGH level, the transistors T1 and T4 turn on, and the transistors T2 and T3 turn off. Herein, when light is incident on the photodiode D1, a current (a photocurrent in the photodiode D1) flows from the accumulation node into the reset line RST via the transistor T4, the photodiode D1 and the transistor T1, and charge is pulled out of the accumulation node (Fig. 11 (b)). Accordingly, the potential Vint drops in accordance with an amount of light to be incident while the clock signal CLK is in the HIGH level (a turn-on period of the backlight 3).

. On the other hand, while the clock signals CLK and CLKR are in the LOW level, the transistors T1 and T4 turn off, and the transistors T2 and T3 turn on. Herein, when light is incident on the photodiode D1, a current (a photocurrent in the photodiode D1) flows from a signal line having the potential VC into the accumulation node via the transistor T2, the photodiode D1 and the transistor T3, and charge is added to the accumulation node (Fig. 11 (c)). Accordingly, the potential Vint rises in accordance with an amount of light to be incident while the clock signal CLK is in the LOW level (a turn-off period of the backlight 3).

In the read period, the clock signals CLK and CLKR turn to the HIGH level, the reset signal RST turns to the LOW level, and the read signal RWS turns to a HIGH level for read. Herein, the transistors T1 and T4 turn on, and the transistors T2 and T3 turn off. Herein, the potential Vint rises by an amount which is (Cq/Cp) times (Cp: a capacitance value of the entire pixel circuit 20, Cq: a capacitance value of the capacitor C1) as large as a rise amount of a potential at the read signal RWS. The transistor M1 constitutes a source follower amplification circuit, and drives the output line OUT in accordance with the potential Vint (Fig. 11 (d)).

As described above, as in the pixel circuit 10 according to the first embodiment, the pixel circuit 20 according to this embodiment includes the one photodiode D1, the one accumulation node, the transistor M1, and the transistors T1 to T4. In the pixel circuit 20, each of the transistors T1 and T4 is the N-type (first conductive type) transistor, and each of the transistors T2 and T3 is the P-type (second conductive type) transistor. The transistors T1 and T4 turn on or off in accordance with the clock signal CLK (first control signal), and the transistors T2 and T3 turn on or off in accordance with the clock signal CLKR (second control signal). The clock signal CLKR changes at a different timing and in the same direction as the clock signal.

In the pixel circuit 20, as in the pixel circuit 10 according to the first embodiment, the current flows into the accumulation node in reverse direction when the backlight is turned on and when the backlight is turned off, and the potential at the accumulation node changes in reverse direction when the backlight is turned on and when the backlight is turned off. According to the pixel circuit 20, hence, it is possible to detect a difference between an amount of light when the backlight is turned on and an amount of light when the backlight is turned off, by use of one sensor pixel circuit, and to give an input function which does not depend on light environments. Thus, it is possible to attain effects which are similar to those in the first embodiment. Moreover, it is possible to reduce the number of control signals, to increase an aperture ratio and to enhance the sensitivity of the sensor pixel circuit, by use of the two clock signals CLK and CLKR as the control signals.

### (Third Embodiment)

Fig. 13 is a circuit diagram of a pixel circuit according to a third embodiment of the present invention. A pixel circuit 30 shown in Fig. 13 includes transistors T1 to T4 and M1, and a photodiode D1. Each of the transistors T1, T3 and M1 is an N-type TFT, and each of the transistors T2 and T4 is a P-type TFT. The pixel circuit 30 is connected to two clock lines CLK and CLKQ.

As shown in Fig. 13, gates of the transistors T1 and T2 are connected to the clock line CLK, a gate of the transistor T3 is connected to the clock line CLKQ, and a gate of the transistor T4 is connected to a read line RWS. In the transistor T1, a source is connected to a reset line RST, and a drain is connected to an anode of the photodiode D1 and a drain of the transistor T3. In the transistor T2, a source is applied with a potential VC, and a drain is connected to a cathode of the photodiode D1 and a drain of the transistor T4. Sources of the transistors T3 and T4 are connected to a gate of the transistor M1. In the transistor M1, a drain is connected to a power supply line VDD, and a source is connected to an output line OUT. In the pixel circuit 30, a node connected to the gate of the transistor M1 serves as an accumulation node, and the transistor M1 functions as a read transistor. The transistor T4 amplifies a potential at the accumulation node when a gate thereof is applied with a HIGH-level potential for read.

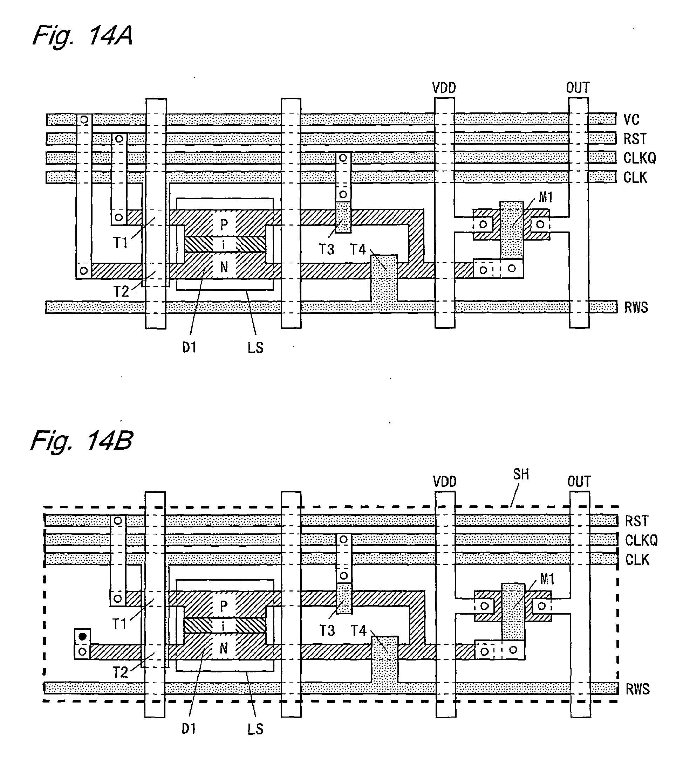

Figs. 14A and 14B are layout diagrams of the pixel circuit 30. The description about these drawings is similar to that in the first embodiment. According to the layout shown in Fig. 14B, the potential VC is applied to a shield SH for covering a layout surface.

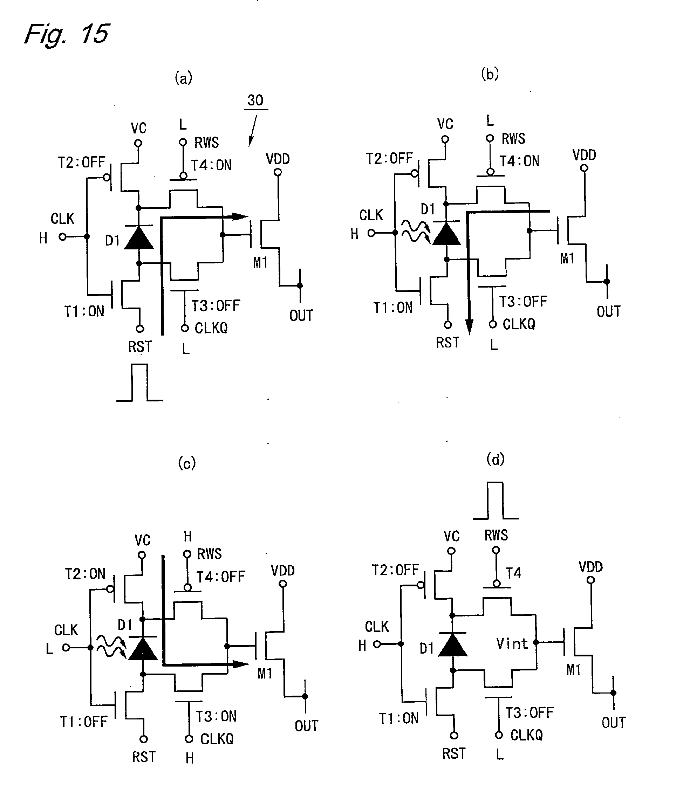

Fig. 15 is a diagram showing operations of the pixel circuit 30. As shown in Fig. 15, the pixel circuit 30 performs (a) reset, (b) accumulation when a backlight is turned on, (c) accumulation when the backlight is turned off, and (d) read, in a one-frame period. The accumulation when the backlight is turned on and the accumulation when the backlight is turned off are performed four times, respectively, in the one-frame period.

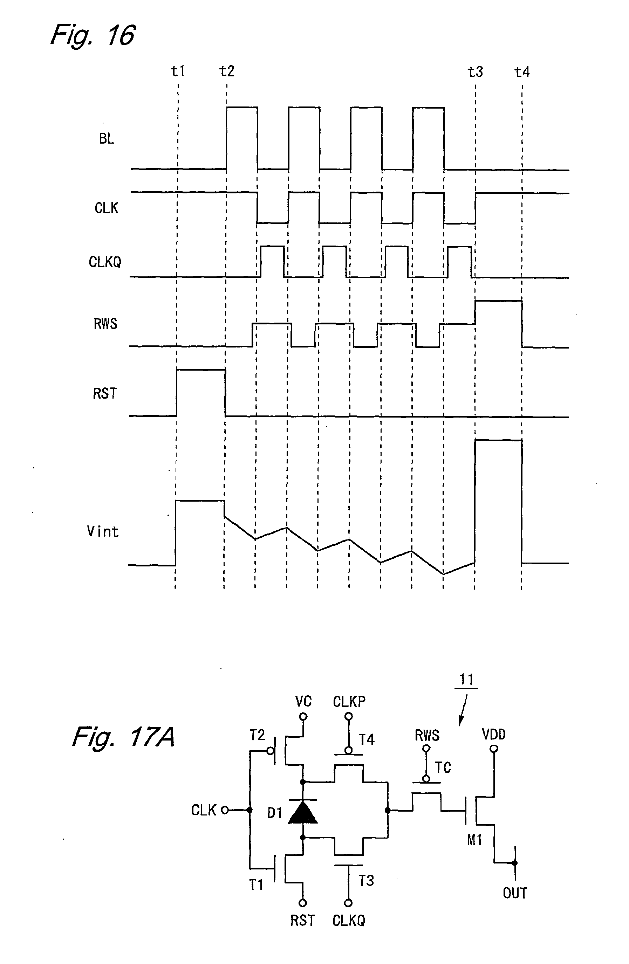

Fig. 16 is a signal waveform diagram of the pixel circuit 30. As shown in Fig. 16, the clock signal CLKQ is an inverted signal of the clock signal CLK. Moreover, in an accumulation period, the read signal RWS is an inverted signal of the clock signal CLK. However, a HIGH-level period of the clock signal CLKQ and a LOW-level period of the read signal RWS in the accumulation period are equal in length to each other, and are shorter than a half cycle of the clock signal CLK. In Fig. 16, a reset period corresponds to a range from a time t1 to a time t2, the accumulation period corresponds to a range from the time t2 to a time t3, and a read period corresponds to a range from the time t3 to a time t4.

In the reset period, the clock signal CLK turns to a HIGH level, the clock signal CLKQ and the read signal RWS turn to a LOW level, and a reset signal RST turns to a HIGH level for reset. Herein, the transistors T1 and T4 turn on, and the transistors T2 and T3 turn off. Accordingly, a current (a forward current in the photodiode D1) flows from the reset line RST into the accumulation node via the transistor T1, the photodiode D1 and the transistor T4 (Fig. 15 (a)), and a potential Vint is reset to a predetermined level.

In the accumulation period, the reset signal RST turns to the LOW level, and the clock signals CLK and CLKQ and the read signal RWS turn to the HIGH level and the LOW level four times, respectively. While the clock signal CLK is in the HIGH level and the clock signal CLKQ and the read signal RWS are in the LOW level, the transistors T1 and T4 turn on, and the transistors T2 and T3 turn off. Herein, when light is incident on the photodiode D1, a current (a photocurrent in the photodiode D1) flows from the accumulation node into the reset line RST via the transistor T4, the photodiode D1 and the transistor T1, and charge is pulled out of the accumulation node (Fig. 15 (b)). Accordingly, the potential Vint drops in accordance with an amount of light to be incident while the clock signal CLK is in the HIGH level (a turn-on period of the backlight 3).

On the other hand, while the clock signal CLK is in the LOW level and the clock signal CLKQ and the read signal RWS are in the HIGH level, the transistors T1 and T4 turn off, and the transistors T2 and T3 turn on. Herein, when light is incident on the photodiode D1, a current (a photocurrent in the photodiode D1) flows from a signal line having the potential VC into the accumulation node via the transistor T2, the photodiode D1 and the transistor T3, and charge is added to the accumulation node (Fig. 15 (c)). Accordingly, the potential Vint rises in accordance with an amount of light to be incident while the clock signal CLK is in the LOW level (a turn-off period of the backlight 3).

In the read period, the clock signal CLK turns to the HIGH level, the clock signal CLKQ and the reset signal RST turn to the LOW level, and the read signal RWS turns to a HIGH level for read. Herein, the transistors T1 and T4 turn on, and the transistors T2 and T3 turn off. The transistor T4 amplifies the potential Vint when the gate thereof is applied with the HIGH-level potential for read. Accordingly, the potential Vint rises by an amount which is (Cq/Cp) times (Cp: a capacitance value of the entire pixel circuit 30, Cq: a capacitance value of the capacitor C1) as large as a rise amount of a potential at the read signal RWS. The transistor M1 constitutes a source follower amplification circuit, and drives the output line OUT in accordance with the potential Vint (Fig. 15 (d)).

As described above, as in the pixel circuit 10 according to the first embodiment, the pixel circuit 30 according to this embodiment includes the one photodiode D1, the one accumulation node, the transistor M1, and the transistors T1 to T4. These constituent elements are equal in characteristics and connection forms to those of the pixel circuit 10 according to the first embodiment. Accordingly, it is possible to attain effects which are equal to those in the first embodiment.

Moreover, in the pixel circuit 30, when the potential for read is applied to the gate of the transistor T4, the potential at the accumulation node (the gate potential at the transistor M1) is amplified. Thus, it is possible to enhance the sensitivity of the sensor pixel circuit.

### (Modification Examples of Embodiments)

The respective embodiments of the present invention may employ the following modification examples. Figs. 17A to 17G are circuit diagrams of pixel circuits according to first to seventh modification examples of the first embodiment. As shown in Figs. 17A to 17G, pixel circuits 11 to 17 are achieved in such a manner that the pixel circuit 10 according to the first embodiment is subjected to the following modifications.

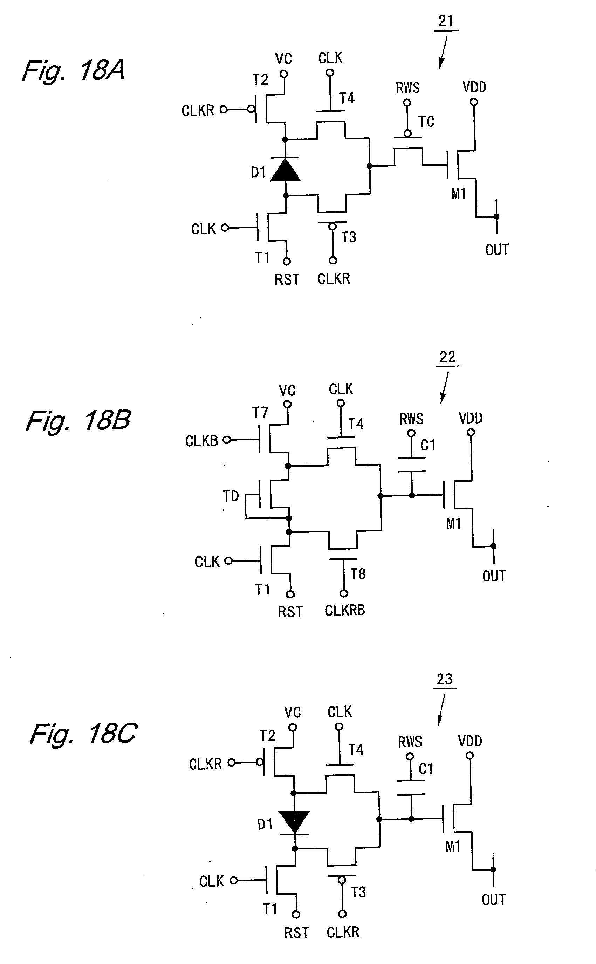

The pixel circuit 11 shown in Fig. 17A corresponds to the pixel circuit 10 in which the capacitor C1 is substituted with a transistor TC which is a P-type TFT. With regard to the pixel circuit 11, in the transistor TC, one of conductive terminals is connected to sources of transistors T3 and T4, the other conductive terminal is connected to a gate of a transistor M1, and a gate is connected to a read line RWS. When a HIGH level for read is applied to the read line RWS, the transistor TC having the connection form described above causes a larger change in a potential at an accumulation node, as compared with the original pixel circuit. Accordingly, it is possible to amplify a difference between a potential at an accumulation node' in the case where incident light is strong and a potential at the accumulation node in the case where incident light is weak, thereby improving the sensitivity of the pixel circuit 11. A pixel circuit 21 shown in Fig. 18A is achieved in such a manner that similar modifications are carried out on the second embodiment.

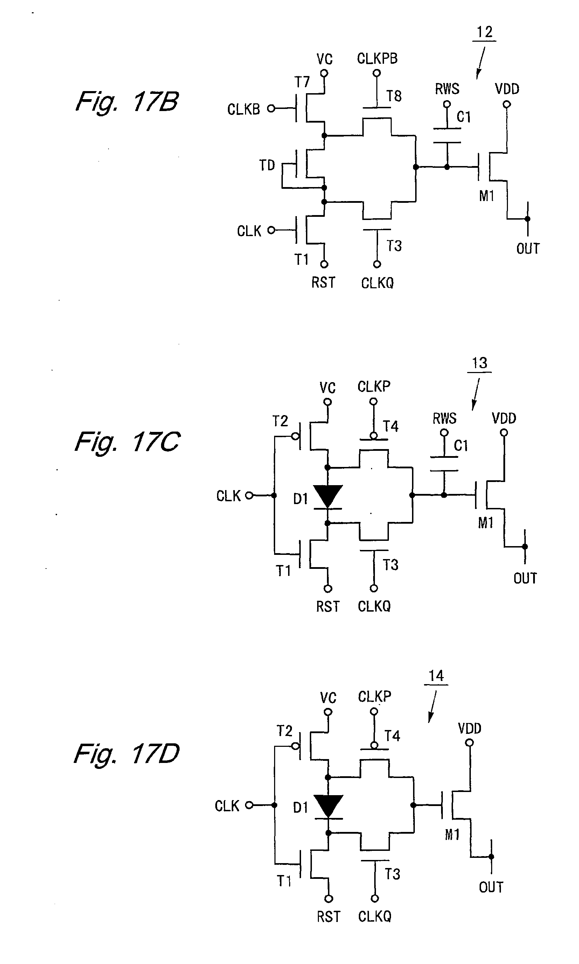

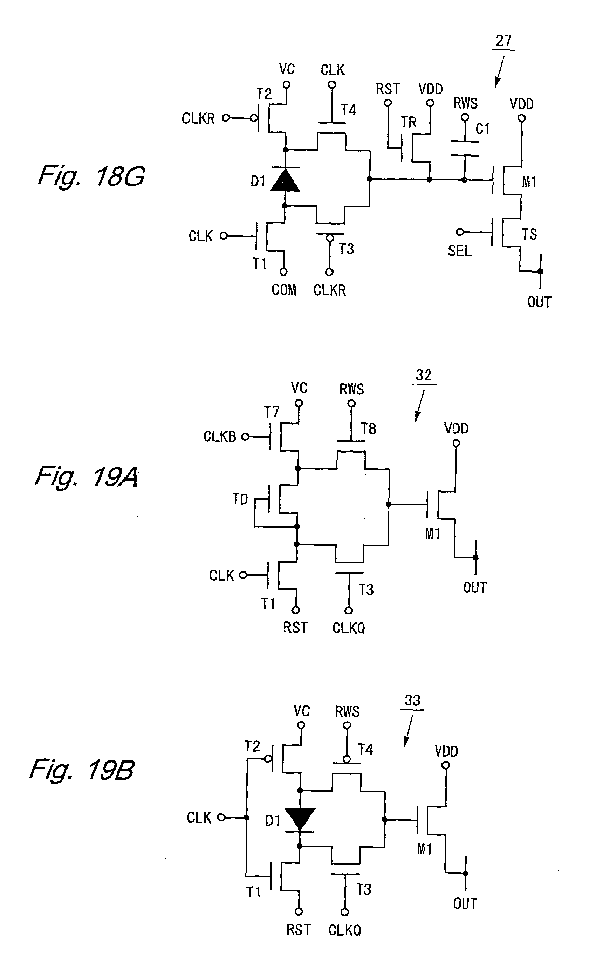

The pixel circuit 12 shown in Fig. 17B corresponds to the pixel circuit 10 in which the photodiode D1 is substituted with a phototransistor TD and the transistors T2 and T4 are substituted with transistors T7 and T8 which are N-type TFTs. With regard to the pixel circuit 12, in the transistor T7, a drain is applied with a potential VC, and a source is connected to a cathode of the phototransistor TD and a source of the transistor T8. A drain of the transistor T8 is connected to a gate of a transistor M1 in conjunction with a source of a transistor T3. A gate of the transistor T7 is connected to a clock line CLKB for propagating an inverted signal of a clock signal CLK. A gate of the transistor T8 is connected to a clock line CLKPB for propagating an inverted signal of a clock signal CLKP. Thus, all the transistors included in the pixel circuit 12 are of an N-type. Accordingly, it is possible to manufacture the pixel circuit 12 by use of a single channel process capable of manufacturing only N-type transistors. A pixel circuit 22 shown in Fig. 18B and a pixel circuit 32 shown in Fig. 19A are achieved in such a manner that similar modifications are carried out on the second and third embodiments.

The pixel circuit 13 shown in Fig. 17C corresponds to the pixel circuit 10 in which the photodiode D1 is connected in reverse. The pixel circuit 13 is supplied with a reset signal RST which is in a HIGH level in a normal condition and turns to a LOW level for reset at the time of reset, and a LOW-level potential VC which is lower than a LOW-level potential for reset. A cathode of the photodiode D1 is connected to sources of transistors T1 and T3, and an anode of the photodiode D1 is connected to sources of transistors T2 and T4. Thus, it is possible to achieve a variety of pixel circuits. A pixel circuit 23 shown in Fig. 18C and a pixel circuit 33 shown in Fig. 19B are achieved in such a manner that similar modifications are carried out on the second and third embodiments.

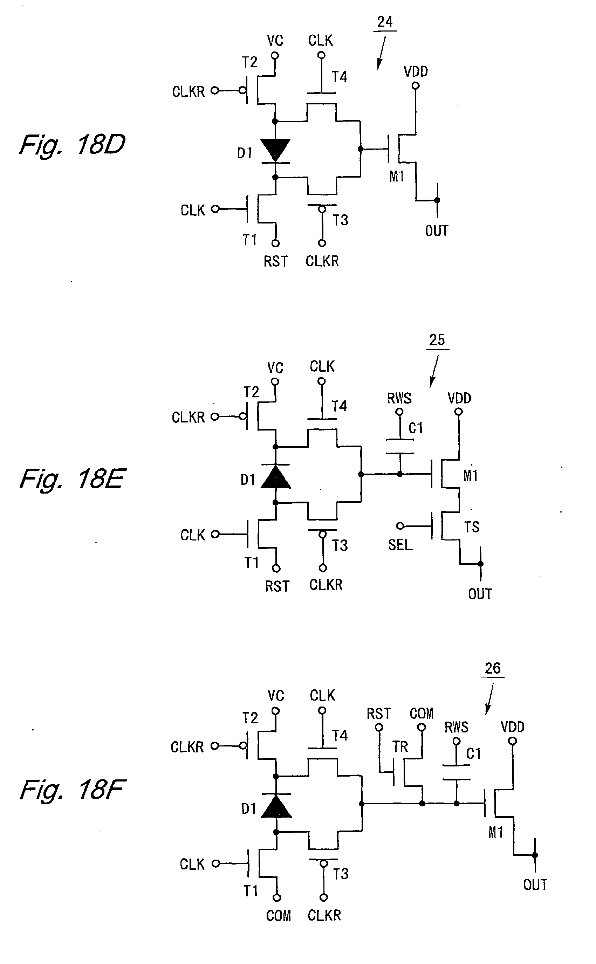

The pixel circuit 14 shown in Fig. 17D corresponds to the pixel circuit 10 in which the photodiode D1 is connected in reverse and from which the capacitor C1 is removed. The pixel circuit 14 is supplied with a reset signal RST and a potential VC as in the pixel circuit 13. However, the reset signal RST turns to a HIGH level for read at the time of read. When the reset signal RST turns to the HIGH level for read, a potential at an accumulation node (a gate potential at a transistor M1) rises, and a current corresponding to the potential at the accumulation node flows into the transistor M1. As described above, the pixel circuit 14 does not include the capacitor C1. Accordingly, it is possible to increase an aperture ratio by virtue of the removal of the capacitor C1, and to improve the sensitivity of the pixel circuit. A pixel circuit 24 shown in Fig. 18D is achieved in such a manner that similar modifications are carried out on the second embodiment.

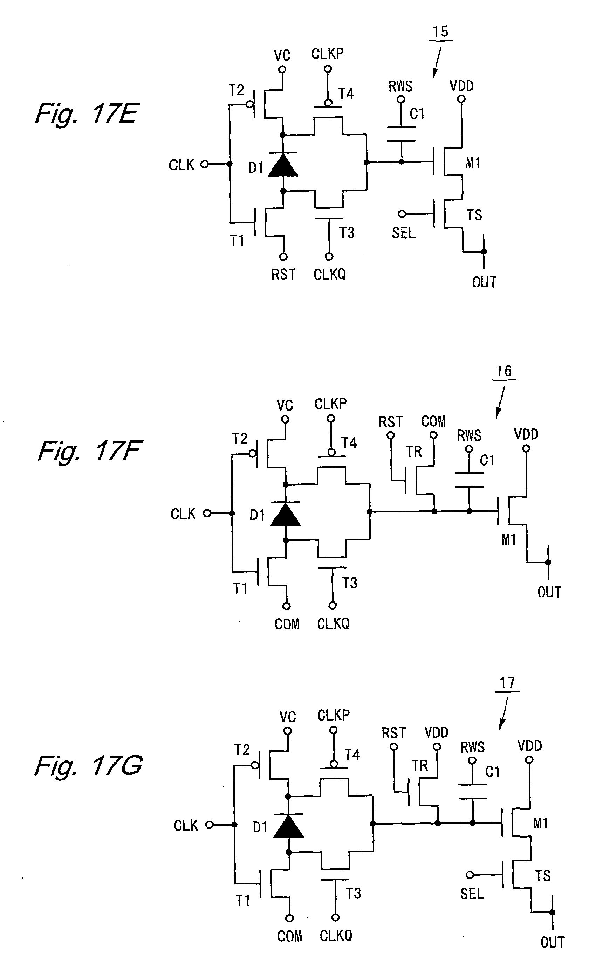

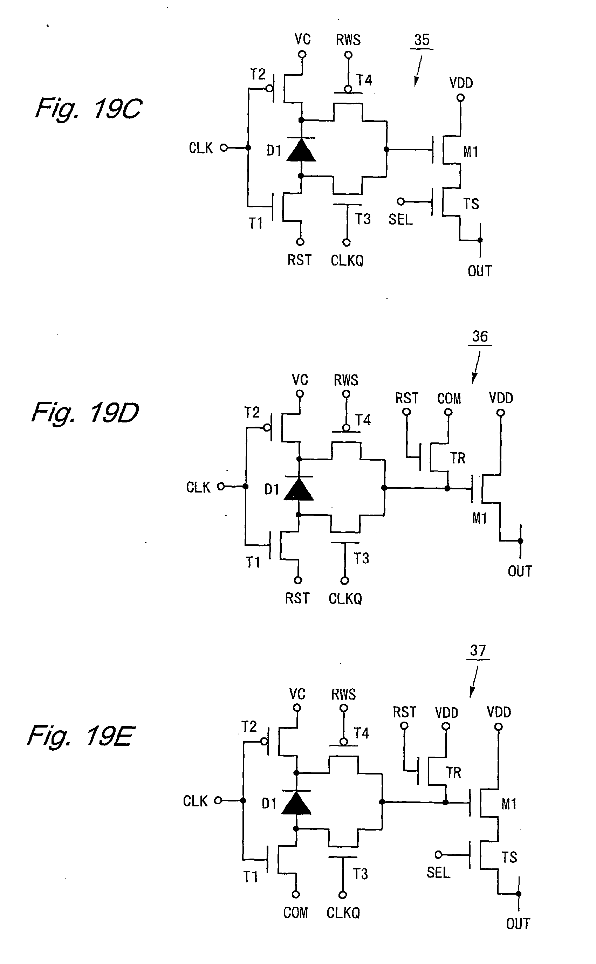

The pixel circuit 15 shown in Fig. 17E corresponds to the pixel circuit 10 to which a transistor TS is added. The transistor TS is an N-type TFT, and functions as a switching element for selection. With regard to the pixel circuit 15, a source of a transistor M1 is connected to a drain of the transistor TS. In the transistor TS, a source is connected to an output line OUT, and a gate is connected to a selection line SEL. A selection signal SEL turns to a HIGH level at the time of read from the pixel circuit 15. Thus, it is possible to achieve a variety of pixel circuits. A pixel circuit 25 shown in Fig. 18E and a pixel circuit 35 shown in Fig. 19C are achieved in such a manner that similar modifications are carried out on the second and third embodiments.

The pixel circuit 16 shown in Fig. 17F corresponds to the pixel circuit 10 to which a transistor TR is added. The transistor TR is an N-type TFT, and functions as a switching element for reset. With regard to the pixel circuit 16, in the transistor TR, a source is applied with a LOW-level potential COM, a drain is connected to a gate of a transistor M1, and a gate is connected to a reset line RST. Moreover, a source of a transistor T1 is applied with the LOW-level potential COM. Thus, it is possible to achieve a variety of pixel circuits. A pixel circuit 26 shown in Fig. 18F and a pixel circuit 36 shown in Fig. 19D are achieved in such a manner that similar modifications are carried out on the second and third embodiments.

The pixel circuit 17 shown in Fig. 17G corresponds to the pixel circuit 10 to which the transistors TS and TR described above are added. Connection forms of the transistors TS and TR are equal to those in the pixel circuits 15 and 16. Thus, it is possible to achieve a variety of pixel circuits. A pixel circuit 27 shown in Fig. 18G and a pixel circuit 37 shown in Fig. 19E are achieved in such a manner that similar modifications are carried out on the second and third embodiments.

Moreover, the first to third embodiments may employ various modification examples in such a manner that the modifications described above are combined arbitrarily without violating their properties.

As described above, in the display devices according to the embodiments of the present invention and the modification examples of the embodiments, it is possible to detect the difference between the amount of light when the backlight is turned on and the amount of light when the backlight is turned off, by use of the sensor pixel circuit including the one optical sensor, the one accumulation node, the transistor for read and the plurality of switching elements. Therefore it is possible to solve the conventional problems, and to give an input function which does not depend on light environments.

It is to be noted that the type of a light source to be provided on the display device is not particularly limited in the present invention. Accordingly, for example, a visible light backlight to be provided for display may be turned on and off a plurality of times, respectively, in a one-frame period. Alternatively, an infrared light backlight for light sensing may be provided separately from the visible light backlight for display on the display device. In such a display device, the visible light backlight may always be turned on, and only the infrared light backlight may be turned on and off a plurality of times, respectively, in the one-frame period.

### INDUSTRIAL APPLICABILITY

The display device according to the present invention is characterized by having an input function which does not depend on light environments, and therefore is applicable to various display devices in which a plurality of optical sensors are provided on a display panel.

### EXPLANATION OF REFERENCE SYMBOLS

- 1 :: Display control circuit
- 2 :: Display panel
- 3 :: Backlight
- 4 :: Pixel region
- 5 :: Gate driver circuit
- 6 :: Source driver circuit
- 7 :: Sensor row driver circuit
- 8 :: Display pixel circuit
- 9 :: Sensor pixel circuit
- 10 to 17, 20 to 27, 30, 32, 33, 35 to 37 :: Pixel circuit

## Claims

1. A display device in which a plurality of optical sensors are arranged in a pixel region, the display device comprising:
a display panel that includes a plurality of display pixel circuits and a plurality of sensor pixel circuits; and
a drive circuit that outputs, to the sensor pixel circuits, a control signal indicating that a light source is turned on or the light source is turned off, wherein
the sensor pixel circuit includes:
one optical sensor;
one accumulation node accumulating charge corresponding to an amount of sensed light;
a read transistor having a control terminal connected to the accumulation node; and
a plurality of switching elements that turn on or off in accordance with the control signal and switch a path for a current flowing through the optical sensor, and
the sensor pixel circuit is configured so that, in accordance with the control signal, the current flowing through the optical sensor flows in a predetermined direction with respect to the accumulation node when the light source is turned on, and flows in the reverse direction with respect to the accumulation node when the light source is turned off.

2. The display device according to claim 1, wherein
the sensor pixel circuit includes:
a first switching element that is provided between a reset line and one of ends of the optical sensor and turns on when the light source is turned on;
a second switching element that is provided between a wire applied with a predetermined potential and the other end of the optical sensor and turns on when the light source is turned off;
a third switching element that is provided between the accumulation node and the one of ends of the optical sensor and turns on when the light source is turned off; and
a fourth switching element that is provided between the accumulation node and the other end of the optical sensor and turns on when the light source is turned on.

3. The display device according to claim 2, wherein
each of the first and third switching elements is configured with a first conductive type transistor,
each of the second and fourth switching elements is configured with a second conductive type transistor,
the first and second switching elements turn on or off in accordance with a first control signal,
the third switching element turns on or off in accordance with a second control signal,
the fourth switching element turns on or off in accordance with a third control signal, and
each of the second and third control signals is an inverted signal of the first control signal, and changes at a timing which is different from that of the first control signal.

4. The display device according to claim 2, wherein
each of the first and fourth switching elements is configured with a first conductive type transistor,
each of the second and third switching elements is configured with a second conductive type transistor,
the first and fourth switching elements turn on or off in accordance with a first control signal, and
the second and third switching elements turn on or off in accordance with a second control signal changing at a different timing in the same direction as the first control signal.

5. The display device according to claim 2, wherein
the sensor pixel circuit further includes a capacitor provided between the accumulation node and a read line.

6. The display device according to claim 2, wherein
the fourth switching element amplifies a potential at the accumulation node when a potential for read is applied to a control terminal thereof.

7. The display device according to claim 1, wherein
the drive circuit outputs, as the control signal, a signal indicating that the light source is turned on and the light source is turned off a plurality of times, respectively, in a one-frame period.

8. A sensor pixel circuit to be arranged in a pixel region of a display device, the sensor pixel circuit comprising:
one optical sensor;
one accumulation node accumulating charge corresponding to an amount of sensed light;
a read transistor having a control terminal connected to the accumulation node; and
a plurality of switching elements that turn on or off in accordance with a control signal indicating that a light source is turned on or the light source is turned off, and switch a path for a current flowing through the optical sensor, wherein
the sensor pixel circuit is configured so that, in accordance with the control signal, the current flowing through the optical sensor flows in a predetermined direction with respect to the accumulation node when the light source is turned on, and flows in the reverse direction with respect to the accumulation node when the light source is turned off.
